# EUROPÄISCHE PATENTSCHRIFT

(11) **EP 1 862 038 B1**
(45) Veröffentlichungstag und Bekanntmachung des Hinweises auf die Patenterteilung: **19.11.2008**
(21) Anmeldenummer: 06722547.4
(22) Anmeldetag: 02.03.2006
(51) Int. Cl.: H05B 41/18, H05B 41/292

(54) **ZÜNDSCHALTUNGSANORDNUNG MIT ERHÖHTER AUSFALLSICHERHEIT**
IGNITION CIRCUIT WITH INCREASED FAIL-SAFETY
CIRCUIT D'ALLUMAGE A SECURITE ACCRUE EN CAS DE DEFAILLANCE

(30) Priorität: 03.03.2005 DE 202005003632 U
(43) Veröffentlichungstag der Anmeldung: 05.12.2007
(73) Patentinhaber: BAG electronics GmbH, 59759 Arnsberg (DE)
(72) Erfinder: MERTENS, Ferdinand, 59755 Arnsberg (DE); SCHAUERTE, Reinhard, 59872 Meschede (DE)
(74) Vertreter: Jungen, Rolf
(86) Internationale Anmeldenummer: PCT/DE2006/000377
(87) Internationale Veröffentlichungsnummer: WO 2006/092130

(56) Entgegenhaltungen:
- WO-A-96/04769

## Beschreibung

Die Erfindung betrifft eine Zündschaltungsanordnung zum Zünden einer Gasentladungslampe, insbesondere eine Hochdruckgasentladungslampe mit den Merkmalen des Oberbegriffs von Anspruch 1.

Gasentladungslampen, insbesondere Hochdruckgasentladungslampen benötigen beim Starten eine Zündspannung, die weit über der Versorgungsspannung zur Aufrechterhaltung der Entladung liegt. Bei Gasentladungslampen, die mit Wechselstrom betrieben werden, sind die entsprechenden Zündgeräte häufig als Überlagerungszündschaltung ausgelegt. Diese umfasst in der Regel einen als Impulstransformator ausgelegten Zündübertrager, der sekundärseitig mit der zu zündenden Lampe und der primärseitig mit einer den Zündimpuls auslösenden Schaltung verbunden ist. Primär-und Sekundärspule des Zündübertragers sind über einen Zündübertragerkern zur Übertragung und Transformation des Zündimpulses gekoppelt. Auf der Primärseite des Zündübertragers wird ein Zündimpuls erzeugt, welcher über den Zündübertrager transformiert auf die Versorgungsschaltung der Lampe gelegt wird. Zur Erzielung eines ausreichend hohen sekundärseitigen Zündimpulses wird das Übertragungsverhältnis des Zündübertragers entsprechend ausgelegt. Die primärseitige Auslöseschaltung umfasst zumindest einen an die Versorgungsschaltung der Lampe angeschlossenen Eingangsenergiespeicher der Auslöseschaltung, ein Schaltermittel zum Öffnen und Schließen der Auslöseschaltung sowie einen primärseitigen Teil des Zündübertragers wie eine Primärspule. Um den Schaltungsaufwand möglichst gering zu halten, haben sich solche Auslöseschaltungen durchgesetzt, welche kein fremd gesteuertes Schaltermittel, d.h. Schaltermittel mit einem zusätzlichen Steuereingang verwenden, sondern ein selbst gesteuertes Schaltermittel, d.h. ein Schalter, dessen Öffnungs- bzw. Schließbedingung allein durch die elektrischen Größen an seinen beiden Anschlussklemmen bestimmt ist. Da der Energiespeicher der Auslöseschaltung an die Wechselstromversorgung der Lampe angeschlossen ist, muss vermieden werden, dass beim Entladen dieses Eingangsenergiespeichers zur Erzeugung eines primärseitigen Zündimpulses ein prinzipiell beliebig hoher Strom durch den Eingangsenergiespeicher fließt. Aus diesem Grund ist dem Eingangsenergiespeicher der Auslöseschaltung ein kapazitives Bauteil in Reihe geschaltet.

Die WO96/04769 zeigt eine Zündschaltungsanordnung nach dem Oberbegriff von Anspruch 1.

In der Regel sind die in der Auslöseschaltung verwendeten Komponenten derartig ausgelegt, dass beim Anlegen der Versorgungsspannung an die Eingangsklemmen ein oder mehrere Zündimpulse primärseitig erzeugt und wie beschrieben sekundärseitig der Versorgungsspannung überlagert werden, während nach dem Zünden der Lampe die am Eingangsenergiespeicher der Auslöseschaltung anliegende Spannung nicht mehr ausreicht um das Erzeugen eines primärseitigen Zündimpulses auszulösen.

Eine solche herkömmliche Zündschaltungsanordnung zum Zünden einer Gasentladungslampe, insbesondere eine Hochdruckgasentladungslampe wird heutzutage auch aufgrund ihres einfachen Aufbaus vielfach eingesetzt. In bestimmten Betriebssituationen kann es jedoch sein, dass die Schaltung nicht mehr zuverlässig arbeitet bzw. sogar ganz ausfällt. Beispielsweise ist die Auslöseschaltung mit dem selbst gesteuerten Schaltermittel in der Regel so ausgelegt, dass innerhalb einer Halbwelle der Versorgungsspannung mehrere primärseitige Zündimpulse erzeugt werden können. Dies bedeutet, dass das selbst gesteuerte Schaltermittel innerhalb eines kurzen Zeitintervalls von beispielsweise wenigen Millisekunden mehrmals öffnen und schließen muss. Die verwendeten selbst gesteuerten Halbleiterschalter weisen jedoch teilweise Alterungsprozesse oder Bauteilestreuungen auf, die zur Folge haben können, dass unter Umständen der Schalter nach der Erzeugung eines ersten primärseitigen Zündimpulses nicht mehr schnell genug schließt und somit keine weiteren primärseitigen Zündimpulse innerhalb einer Halbwelle erzeugbar sind. Eine weitere Problematik kann dadurch entstehen, dass die Entladungslampe ausfällt und die gerade im Vorschaltgerät zur Bereitstellung der Wechselstrom-Versorgungsspannung der Lampe gespeicherte Energie über die Reihenschaltung des Eingangsenergiespeichers der Auslöseschaltung und des oben angegebenen kapazitiven Bauteils transportiert wird, was unter Umständen zu solch hohen Spannungen über dem genannten kapazitiven Bauteil führt, dass dieses ausfällt.

Somit liegt der Erfindung die Aufgabe zugrunde, eine herkömmliche Zündschaltungsanordnung so weiter zu bilden, dass die genannten Probleme zumindest teilweise behoben sind.

Die Erfindung löst diese Aufgabe auf überraschende Weise schon mit einer Zündschaltungsanordnung mit den Merkmalen von Anspruch 1.

Danach weist die erfindungsgemäße Zündschaltungsanordnung zum Zünden einer Gasentladungslampe, der eine Versorgungsschaltung zur Bereitstellung einer Wechselstrom-Versorgungsspannung an der Lampe zugeordnet ist, einen Zündübertrager auf, welcher primärseitig mit einer Auslöseschaltung und sekundärseitig zur Übertragung eines Zündimpulses mit der Lampe verbunden ist. Die Auslöseschaltung weist eine Reihenschaltung von zumindest einem an die Versorgungsschaltung der Lampe angeschlossenen Eingangsenergiespeicher, ein selbst gesteuertes Schaltermittel und einen primärseitigen Teil des Zündübertragers auf, wobei dem Eingangsenergiespeicher der Auslöseschaltung ein kapazitives Bauteil in Reihe geschaltet ist. Die erfindungsgemäße Zündschaltungsanordnung zeichnet sich dadurch aus, dass ein weiteres Halbleiterbauelement umfasst ist, das bipolar, zweipolig und selbst gesteuert ausgebildet ist und die zwischen dessen Anschlusspolen abfallende Spannung begrenzt.

Mit der angegebenen konstruktiven Maßnahme kann sowohl erreicht werden, dass das selbst gesteuerte Schaltermittel in der Auslöseschaltung bei einer entsprechenden Auslegung des Bauteils im wesentlichen unabhängig vom Alterungszustand des Schalters sicher innerhalb einer Halbwelle mehrmals öffnet und schließt, als auch sicher vermieden wird, dass bei einem Betriebsausfall der Lampe die im Vorschaltgerät gespeicherte und nachfolgend in das zum Eingangsenergiespeicher der Auslöseschaltung in Reihe geschaltete kapazitive Bauteil geführte Energie nicht zu einer solch hohen Spannung an diesem Bauteil führt, dass dieses ausfällt.

Vorteilhafte Ausführungsformen sind in den Unteransprüchen angegeben.

Es kann zweckmäßig sein, wenn das selbst gesteuerte Schaltermittel in der Auslöseschaltung zweipolig ausgebildet ist und beim Erreichen einer vorgegebenen Spannung an dessen Polen schließt und beim Unterschreiten eines vorgegebenen Haltestromes sperrt.

Um sicher zu stellen, dass das selbst gesteuerte Schaltermittel in der Auslöseschaltung besonders zuverlässig und mit einer hohen Lebensdauer der Auslöseschaltung dafür sorgt, dass innerhalb einer Halbwelle der Wechselstromversorgungsspannung mehrere primärseitige Zündimpulse erzeugbar sind, d.h. das Schaltermittel mehrmals innerhalb einer Halbwelle öffnet und schließt, kann vorgesehen sein, dass das zumindest eine weitere, spannungsbegrenzende, bipolare und zweipolige Halbleiterbauelement in Reihe zum Schaltermittel angeordnet ist. Die an dem weiteren Halbleiterbauelement abfallende Spannung bewirkt, dass sich die Haltezeit, d.h. die Zeitperiode innerhalb dessen das selbst gesteuerte Schaltermittel durchgängig ist, erniedrigt. Insofern erhöht sich die Zeit, innerhalb dessen der Eingangsenergiespeicher der Auslöseschaltung über die Wechselstrom-Versorgungsspannung aufgeladen wird, sodass die Schaltspannung des selbst gesteuerten Schaltermittels innerhalb einer Wechselstromhalbwelle mehrmals erreichbar ist. Ein solches spannungsbegrenzendes Halbleiterbauelement zur Reduzierung der Haltezeit des Schaltermittels kann beispielsweise eine Suppressordiode sein. Darüber hinaus ist jedoch jedes andere Halbleiterbauelement möglich, welches in einem Ersatzschaltbild mit zwei parallel angeordneten Reihenschaltungen, bestehend jeweils aus einer idealen Spannungsquelle und einer idealen Diode darstellbar ist, wobei die Polarität der zwei Reihenschaltungen zueinander vertauscht sind. Wie der Fachmann erkennt, kann als solches weiteres, spannungsbegrenzendes Halbleiterbauelement auch ein Varistor eingesetzt sein.

Es kann zweckmäßig sein, wenn das weitere spannungsbegrenzende Halbleiterbauelement, welches die Halterzeit des Schaltermittels erniedrigt, einen Durchlassstrom aufweist, der mit steigender an dessen Anschlusspolen anliegender Spannung nicht linear ansteigt, wobei bei einer Spannung von 10 Volt ein Durchlassstrom von weniger als 100 mA, insbesondere von weniger als 10 mA fließt. Ein derartiges Halbleiterbauelement eignet sich besonders gut für die Erniedrigung der Haltezeit des Schaltermittels innerhalb der Auslöseschaltung, wenn die Wechselstrom-Versorgungsspannung durch eine Netzspannung bereitgestellt ist.

Es kann zweckmäßig sein, wenn der Eingangsenergiespeicher für die Auslöseschaltung zumindest einen Kondensator (60) aufweist, der über die Versorgungswechselspannung aufladbar ist. Dieser Eingangsenergiespeicher kann sowohl durch einen einzelnen Kondensator, jedoch auch durch eine Reihen- oder Parallelschaltung von Kondensatoren bereitgestellt sein.

Besonders zweckmäßig ist es, wenn ein weiteres, spannungsbegrenzendes, bipolares, zweipoliges und selbst gesteuertes Halbleiterbauelement parallel zu dem genannten kapazitiven Bauteil angeordnet ist, das in Reihe zum Eingangsenergiespeicher der Auslöseschaltung geschaltet ist. Durch die parallele Anordnung kann somit eine Begrenzung der Spannung, die über dem kapazitiven Bauteil abfällt, erreicht werden. Insofern kann sichergestellt werden, dass diese Spannung einen vorgegebenen Wert nicht überschreitet. Es sei darauf hingewiesen, dass eine solche Parallelschaltung des zusätzlichen Halbleiterbauelements mit dem kapazitiven Bauteil dergestalt sein kann, dass die jeweiligen Anschlusspole des kapazitiven Bauteils und des zusätzlichen Halbleiterbauteils direkt miteinander verbunden sind, es kann jedoch auch sein, dass ein oder beide Arme der Parallelschaltung noch weitere Bauteile umfassen. Einzige Bedingung ist, dass das weitere spannungsbegrenzende Bauteil die Spannung an dem kapazitiven Bauteil beschränkt, wobei die an dem weiteren Bauteil abfallende Spannung je nach Verschaltung auch größer als die Spannung an dem kapazitiven Bauteil sein kann. Insbesondere ist es auch möglich, dass das weitere spannungsbegrenzende Halbleiterbauteil parallel zu der Reihenschaltung angeordnet ist, die zumindest den Eingangsenergiespeicher und das kapazitive Bauteil umfasst.

Als solches weiteres Bauteil zum Schutz der parallel zum Eingangsenergiespeicher der Auslöseschaltung angeordneten Kapazität, kann beispielsweise ein Varistor oder auch eine Suppressordiode eingesetzt werden.

Eine überaus vorteilhafte Ausführungsform der Erfindung ergibt sich, wenn ein solches selbst gesteuertes, bipolares und zweipoliges gebildetes Halbleiterbauelement in Reihe zum selbst gesteuerten Schaltermittel in der Auslöseschaltung und ein weiteres selbst gesteuertes, bipolares, zweipoliges Halbleiterbauelement parallel zu dem genannten kapazitiven Bauteil angeordnet sind, sodass gleichzeitig die beiden in einer herkömmlichen Zündschaltungsanordnung latent vorhandenen Probleme gelöst sind.

Die Erfindung wird im Folgenden durch das Beschreiben mehrerer, weitere vorteilhafte Merkmale aufweisende Ausführungsformen unter der Bezugnahme auf die beiliegenden Zeichnungen erläutert, wobei
- Fig. 1: in einer Prinzipskizze eine erste Ausführungsform der Erfindung,
- Fig. 2: in einer Prinzipskizze eine zweite Ausführungsform der Erfindung,
- Fig. 3: in einer Prinzipskizze eine dritte nicht beanspruchte Ausführungsform und
- Fig. 4: in einer Prinzipskizze eine vierte Ausführungsform der Erfindung
zeigt.

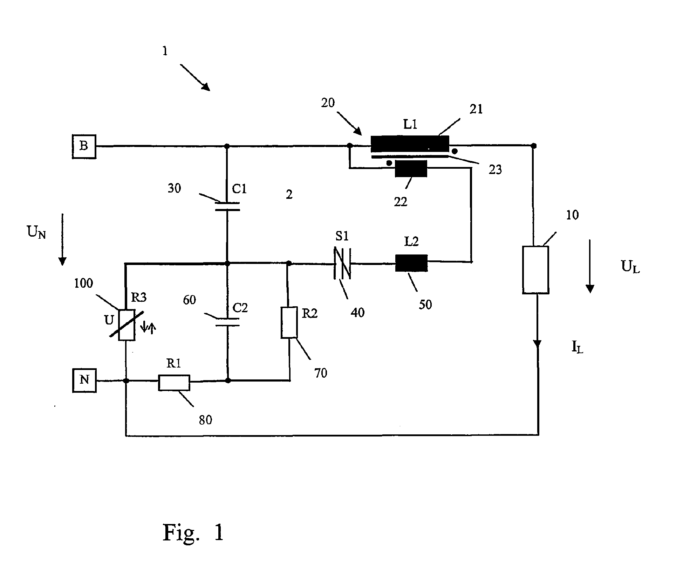

In Fig. 1 ist eine erfindungsgemäße Zündschaltungsanordnung des Überlagerungstyps für eine Hochdruckgasentladungslampe angegeben, die über eine Wechselstromversorgung mit elektrischer Energie versorgt wird. An den Klemmen B - N, liegt die von einem konventionellen Vorschaltgerät bereitgestellte Wechselspannung U_{N} an. Die Lampe 10 ist am Ausgang der Zündschaltungsanordnung 2 angeschlossen. Diese umfasst einen Zündübertrager 20, dessen sekundärseitige Spule 21 in der Versorgungsschaltung der Lampe 10 angeordnet ist. Die primärseitige Spule 22 bildet zusammen mit einer Luftspule 50, dem selbst gesteuerten Schalter 40 und einem Energiespeicher in Form eines Stoßkondensators 30 eine Zündauslöseschaltung, die den wesentlichen Teil der Zündschaltungsanordnung ausmacht. Darüber hinaus ist dem Stoßkondensator 30 ein weiterer Kondensator 60 in Reihe geschaltet, zu dem selbst ein Widerstand 70 parallel geschaltet ist. Zur Kopplung von Primärspule 22 und Sekundärspule 21 des Zündübertragers 20 dient ein Spulenkern 23. Gemäß der Erfindung umfasst die Zündschaltungsanordnung ein weiteres Bauelement, das bipolar, zweipolig und selbst gesteuert ausgebildet ist und die zwischen dessen Anschlusspolen abfallende Spannung begrenzt. Ein Varistor 100 ist parallel zum Kondensator 60 angeordnet, der in Reihe zum Stoßkondensator 30 platziert ist.

Im Folgenden wird die Funktionsweise der in Fig. 1 angegebenen erfindungsgemäßen Zündschaltungsanordnung beschrieben. Zu Beginn fließt kein Lampenstrom (Brennstrom) I_{L} durch die Lampe 10, sodass diese in einer Startphase durch das Erzeugen von Hochspannungszündimpulsen gestartet werden muss. Der Eingangsenergiespeicher, d.h. der Kondensator 30 der Auslöseschaltung 2 ist über den Kondensator 60 und den Widerstand 80 an die Wechselstrom-Versorgungsspannung U_{N} angeschlossen, insofern wird der Energiespeicher 30 aufgeladen, wobei der Schalter 40 geöffnet ist. Der selbst gesteuerte Schalter 40 ist in der angegebenen Ausführungsform als Sidac ausgebildet, insofern leitet dieser beim Überschreiten einer voreingestellten Spannung an dessen Anschlussklemmen. In dem angegebenen Beispiel wird die Wechselstrom-Versorgungsspannung U_{N} durch eine Netzspannung bereitgestellt und der selbst gesteuerte Schalter 40 schaltet sich leitend, wenn an dessen Anschlussklemmen eine Spannung > 220 Volt anliegt. Nach dem Laden des Kondensators C 1 wird demnach durch Schließen des Schalters 40 der durch die Bauteile 30, 22, 50 und 40 gebildeten Reihenschaltkreis geschlossen, wodurch sich der als Eingangsenergiequelle für die Zündauslöseschaltung wirkende Kondensator 30 entlädt. Ein primärseitiger Zündimpuls entsteht, welcher mittels des Zündübertragers 20 in einen sekundärseitigen Hochspannungsimpuls transformiert wird. Dabei wird die Magnetisierung der primärseitigen Spulenwicklung der Spule 22 über den Zündübertragerkern 23 auf die sekundärseitige Spulenwicklung 21 mit dem Übertragungsverhältnis des Zündübertragers transformiert und der Netzspannung überlagert. Die Luftspule 50 dient dabei als Strombegrenzer für den Schalter 40. Wie der Fachmann erkennt, wirkt der Kondensator 60 einem Kurzschluss der Wechselstrom-Versorgung entgegen, wenn der Stoßkondensator 30 entladen wird, indem sich bei der Entladung von C 1 die Spannung im Kondensator 60 erhöht. Der entladene Stoßkondensator 30 wiederum wird über den Widerstand 70 geladen, wenn der Stoßkondensator den Zündkreis speist. Der in der Schaltung angegebene Widerstand 80 dient der zusätzlichen Strombegrenzung in der Wechselstrom-Versorgung. Durch die angegebene Selbststeuerung des Schalters 40 wird erreicht, dass zumindest ein Zündimpuls zu einem solchen Zeitpunkt angesteuert wird, bei welchem die Wechselstrom-Versorgung in der Lage ist, die Lampe nach dem Zünden am Brennen zu halten. Je nach Anwendung kann die Schaltung auch so ausgelegt sein, dass innerhalb einer Halbwelle mehrere solche primär- bzw. sekundärseitigen Zündimpulse erzeugt werden. Darauf wird untenstehend näher eingegangen.

Nach dem Zünden der Lampe 10 wird die Zündschaltungsanordnung und insbesondere die Zündauslöseschaltung nicht mehr benötigt. Der Schalter 40 ist so ausgelegt, dass im Brennbetrieb der Lampe die Spannung am Stoßkondensator C 1 nicht mehr ausreicht, den selbst gesteuerten Schalter 40 leitend zu schalten. Wie der Fachmann erkennt, wirkt die in Fig. 1 dargestellte Zündschaltungsanordnung bipolar, d.h. sowohl bei der negativen als auch bei der positiven Halbwelle wird zumindest ein Zündimpuls erzeugt, wenn kein Lampenstrom I_{L} fließt.

Das in Fig. 1 als Varistor 100 ausgebildete weitere Halbleiterbauelement gemäß der Erfindung besitzt keine wesentliche Funktion während der beschriebenen Zündphase der Schaltung bzw. der Brennphase der Lampe. Dies wird dadurch erreicht, dass der Varistor mit einer solchen Grenzspannung ausgelegt ist, die beim normalen Betrieb der Zündschaltungsanordnung bzw. der Lampe an dessen Anschlussklemmen nicht erreicht wird. Im vorliegenden Beispiel ist diese Grenzspannung auf 385 Volt eingestellt, insofern leitet der Varistor mit einem Leckstrom < 1 mA, wenn die an seinen Anschlussklemmen anliegende Spannung kleiner als der angegebene Wert ist. Beim normalen Betrieb liegen hier maximal 230 Volt an, insofern leitet der Varistor nicht gut. Sollte jedoch die Lampe im Brennbetrieb ausfallen, ergibt sich folgende Situation. Wie oben stehend erläutert, sind die Anschlussklemmen B - N an ein Vorschaltgerät angeschlossen, das aufgrund der negativen Kennlinie der Lampe notwendig ist um den Lampenstrom I_{L} zu beschränken. Hierzu wird bei konventionellen Vorschaltgeräten eine hohe Induktivität L_{K} verwendet. Fällt nun im Brennbetrieb der Lampe diese zu einem Zeitpunkt aus, in welchem in dem Vorschaltgerät eine hohe Energie E =(½ L_{K} I²_{L}) gespeichert ist, muss diese hohe Energie in die Kondensatoren 30 bzw. 60 übergeführt werden. Dabei wirkt der Schalter 40 als Schutz für den Stoßkondensator 30, sodass letztlich die gesamte Energie in den nachfolgenden Kondensator C 2 übergeführt wird. Dessen Energie ergibt sich dann zu E=(½ C2 U²), wobei U die an C 2 abfallende Spannung angibt. Der beschriebene Vorgang hat letztlich zur Folge, dass durch den Ausfall der Gasentladungslampe an C 2 eine Spannung entsteht, die mehrere Tausend Volt betragen und zur Zerstörung des Bauteils führen kann. Sobald jedoch die Grenzspannung des Varistors 100, hier 385 Volt überschritten ist, leitet dieser und nimmt die Energie auf, wodurch der Ausfall von C 2 vermieden werden kann.

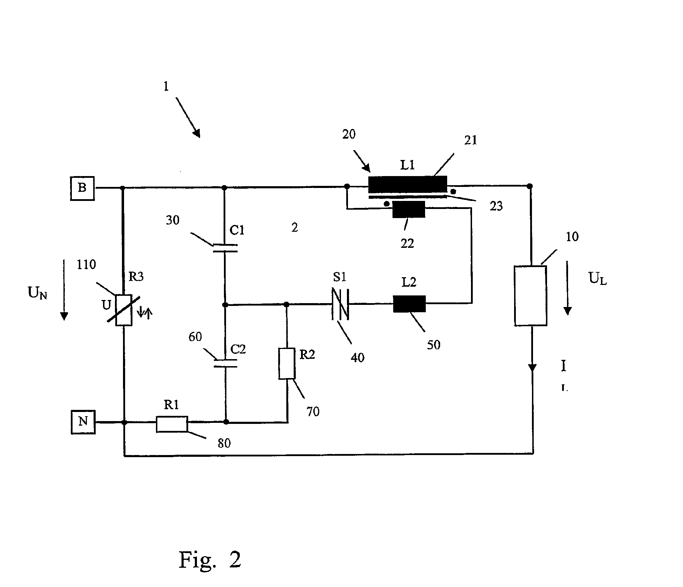

Eine weitere Ausführungsform der Erfindung, bei welcher ein Ausfall von C 2 bei einer Betriebsstörung der Lampe durch das Auftreten einer zu großen Spannung an den Anschlussklemmen von C 2 vermieden werden kann, zeigt Fig. 2. Im Unterschied zu der in Fig. 1 dargestellten Schaltung ist das selbst gesteuerte und spannungsbegrenzende weitere Halbleiterbauelement als Varistor 110 ausgebildet, der direkt zwischen den Klemmen der Wechselstrom-Versorgungsspannung B - N angeordnet ist und demnach wiederum parallel zu C2 angeordnet ist, wobei der C 2 umfassende Strompfad darüber hinaus den Stoßkondensator 30 und den Widerstand 80 umfasst. Auch hier schützt der Varistor 110 wie in dem in Fig. 1 dargestellten Beispiel den Kondensator C2 vor zerstörerischen Betriebsspannungen.

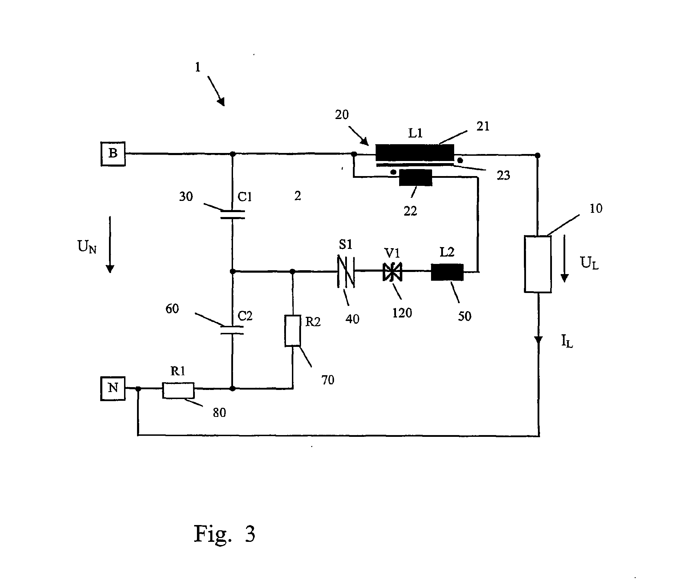

Fig. 3 zeigt eine weitere Ausführungsform, bei welcher das weitere spannungsbegrenzende Halbleiterbauelement, das bipolar, zweipolig und selbst gesteuert ausgebildet ist, in der Auslöseschaltung angeordnet ist. In dem gezeigten Beispiel ist eine "transient suppressor"-Diode in Reihe zum selbst gesteuerten Schalter 40 angeordnet. Diese Diode 120 arbeitet symmetrisch zur Spannung an ihren beiden Eingangsklemmen derartig, dass die Diode bis zu einer Spannung von einem vorgegebenen Wert, im angegebenen Beispiel von etwa 10 Volt, sehr hochohmig ist, sodass je nach ausgewählter Diode ein Durchlassstrom von weniger als 100 mA und in einer anderen Ausführungsform weniger als 10 mA fließt. Die Funktionsweise der Suppressordiode innerhalb der Auslöseschaltung ist Folgende. Wie oben stehend dargestellt, leitet das Schaltermittel 40, das hier als SIDAC ausgebildet ist, wenn die an diesem Bauteil anliegende Spannung größer als 220 Volt ist. Infolge dessen entlädt dann sich der Kondensator C 1, wodurch ein einzelner Zündimpuls primärseitig und damit auch sekundärseitig erzeugt wird. Der Schalter 40 öffnet die Auslöseschaltung, wenn sein Haltestrom unterschritten wird, der hier je nach Ausführungsform etwa 100 mA bzw. 10 mA beträgt. Nach dem Öffnen des selbst gesteuerten Schaltermittels 40 kann der Kondensator C 1 wieder zur Erzeugung eines weiteren Zündimpulses aufgeladen werden. In bestimmten Schaltungsanordnungen ist es vorteilhaft, wenn innerhalb einer Halbwelle mehrere solcher Zündimpulse erzeugt werden, infolge dessen muss der Schalter 40 im dargestellten Beispiel innerhalb weniger Millisekunden mehrmals leitend und nicht leitend werden. Das Vorsehen der Suppressordiode 120 unterstützt das Unterschreiten des Haltestroms des Schalters 40, da an der Diode 120 die erwähnte Durchlassspannung von etwa 10 Volt abfällt. Infolge dessen wird der Haltestrom des Schalters 40 schneller unterschritten und damit dessen Haltezeit verkürzt. Das Vorsehen der Diode 120 stellt somit auch bei Alterungsprozessen oder Bauteileschwankungen des Schalters 40 sicher, dass dessen Haltestrom nach dem Erzeugen eines primärseitigen Zündimpulses schnell unterschritten wird, sodass innerhalb einer Halbwelle der Wechselstrom-Versorgungsspannung mehrere derartige Zündimpulse primärseitig erzeugt werden können.

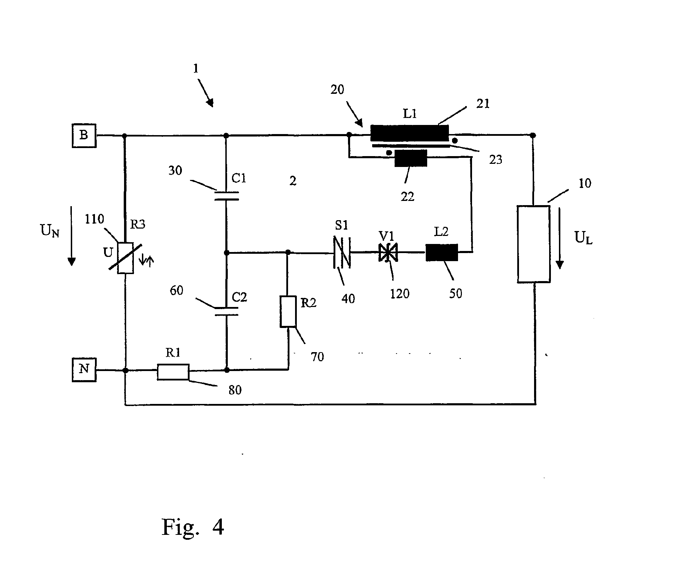

Wie in Fig. 4 dargestellt, können die beiden erläuterten konstruktiven Gestaltungen zur Erhöhung der Ausfallsicherheit einer herkömmlichen Zündschaltungsanordnung auch kombiniert werden, sodass einerseits der Kondensator C 2 beim Ausfall der Lampe 10 geschützt ist und andererseits auch sichergestellt ist, dass unabhängig von der Betriebszeit der Schaltung der Haltestrom des selbst gesteuerten Schalters 40 innerhalb einer Halbwelle der Wechselstrom-Versorgungsspannung zumindest einmal unterschritten werden kann, sodass wenigstens zwei Zündimpulse erzeugbar sind. Es versteht sich, dass der Varistor zum Schutz von C 2 nicht unbedingt, wie in Fig. 4 angegeben, zwischen den Anschlussklemmen B - N angeordnet sein muss, sondern beispielsweise auch wie in Fig. 1 gezeigt verschaltet sein kann.

### Bezugszeichenliste

- 1: Zündschaltungsanordnung
- 2: Auslöseschaltung
- 10: Gasentladungslampe
- 20: Zündübertrager
- 21: primärseitige Spulenwicklung/Spule
- 22: sekundärseitige Spulenwicklung/Spule
- 23: Zündübertragerkern
- 30: Stoßkondensator
- 40: Schalter
- 50: Luftspule
- 60: Kondensator
- 70, 80: Widerstand
- 100, 110: Varistor
- 120: Suppressordiode
- E: gespeicherte Energie
- U_{N}: Wechselstromversorgungsspannung
- U_{L}: Lampenspannung
- I_{L}: Lampenstrom (Brennstrom)

## Patentansprüche

1. Zündschaltungsanordnung (1) zum Zünden einer Gasentladungslampe (10), insbesondere einer Hochdruckgasentladungslampe, der eine Versorgungsschaltung zur Bereitstellung einer Wechselstrom-Versorgungsspannung (U_{N}) an die Lampe zugeordnet ist, umfassend einen Zündübertrager (20), welcher primärseitig mit einer Auslöseschaltung und sekundärseitig zur Übertragung eines Zündimpulses mit der Lampe verbunden ist; wobei die Auslöseschaltung eine Reihenschaltung umfassend zumindest einen an die Versorgungsschaltung der Lampe angeschlossenen Eingangsenergiespeicher (30), ein selbst gesteuertes Schaltermittel (40) und einen primärseitigen Teil des Zündübertragers (22) aufweist, und dem Eingangsenergiespeicher (30) der Auslöseschaltung ein kapazitives Bauteil (60) in Reihe geschaltet ist, **gekennzeichnet durch** zumindest ein erstes, als Varistor (100, 110) ausgebildetes Halbleiterbauelement , das bipolar, zweipolig und selbst gesteuert ausgebildet ist und die zwischen dessen Anschlusspolen abfallende Spannung begrenzt und das parallel zu dem genannten kapazitiven Bauteil (60) geschaltet ist.

2. Zündschaltungsanordnung (1) nach Anspruch 1, **dadurch gekennzeichnet, dass** das Schaltermittel (40) zweipolig ausgebildet ist und beim Erreichen einer vorgegebenen Spannung schließt und beim Unterschreiten eines vorgegebenen Haltestromes sperrt.

3. Zündschaltungsanordnung (1) nach Anspruch 1 oder 2, **dadurch gekennzeichnet, dass** ein weiteres zweites spannungsbegrenzendes Halbleiterbauelement (120) vorgesehen ist, das bipolar, zweipolig und selbst gesteuert ausgebildet und in Reihe zum Schaltermittel (40) angeordnet ist und das die Haltezeit des Schaltermittels erniedrigt.

4. Zündschaltungsanordnung (1) nach Anspruch 3, **dadurch gekennzeichnet, dass** der Durchlassstrom des weiteren zweiten Halbleiterbauelements (120) mit steigender an dessen Anschlusspolen anliegender Spannung nichtlinear ansteigt, wobei bei einer Spannung von 10 V ein Durchlassstrom von weniger als 100 mA, insbesondere von weniger 10 mA fließt.

5. Zündschaltungsanordnung (1) nach einem der Ansprüche 1 bis 4, **dadurch gekennzeichnet, dass** der Eingangsenergiespeicher für die Auslöseschaltung zumindest einen Kondensator (60) aufweist.

6. Zündschaltungsanordnung (1) nach einem der Ansprüche 1 bis 5, **dadurch gekennzeichnet, dass** der Varistor (110) parallel zu der Reihenschaltung umfassend zumindest den Eingangsenergiespeicher (30) und das kapazitiven Bauteil (60) angeordnet ist.

7. Zündschaltungsanordnung (1) nach einem der Ansprüche 1 bis 5, **dadurch gekennzeichnet, dass** das in Reihe zum Schaltermittel (40) angeordnete weitere zweite Halbleiterbauelement einen Varistor und/oder eine Suppressordiode (120) umfasst.

## Claims

1. Ignition circuit arrangement (1) for igniting a gas discharge lamp (10), in particular a high-pressure gas discharge lamp, having an associated power supply circuit for providing the lamp with an alternating current supply voltage (N_{N}), comprising an ignition transmitter (20) which is connected on the primary side with a trigger circuit and on the secondary side with the lamp, for transmitting the ignition pulse; wherein the trigger circuit having a series connection comprises at least one input energy storage (30) connected to the power supply circuit of the lamp, a self-controlled switch means (40) and a primary-side part of the ignition transmitter (22), and wherein the input energy storage (30) of the trigger circuit is connected in series with a capacitive component (60), **characterized by** at least one first semiconductor component which is formed as a variable resistor (100, 110) which is configured in a bipolar, dipolar and self-controlled form and which limits the voltage dropping between its connecting poles and is connected in parallel with the said capacitive component (60).

2. Ignition circuit arrangement (1) according to claim 1, **characterized in that** the switch means (40) is configured in a dipolar form and closes upon reaching a predetermined voltage and blocks upon falling below a predetermined holding current.

3. Ignition circuit arrangement (1) according to claim 1, **characterized in that** a further, second voltage-limited semiconductor component (120) is provided which is configured in a bipolar, dipolar and self-controlled form and which is arranged in series with the switch means (40) and lowers the hold time of the switch means.

4. Ignition circuit arrangement (1) according to claim 3, **characterized in that** the forward current of the further, second semiconductor component (120) increases in a non-linear fashion with an increasing voltage that is applied on its connecting poles, wherein a forward current flows which is less than 100 mA, in particular less than 10 mA, at a voltage of 10 V.

5. Ignition circuit arrangement (1) according to one of the claims 1 to 4, **characterized in that** the input energy storage for the trigger circuit includes at least one capacitor (60).

6. Ignition circuit arrangement (1) according to one of the claims 1 to 5, **characterized in that** the variable resistor (120) is arranged in a parallel connection with the series connection comprising at least the input energy storage (30) and the capacitive component (60).

7. Ignition circuit arrangement (1) according to one of the claims 1 to 5, **characterized in that** the further, second semiconductor component which is arranged in a series connection with the switch means (40) comprises a variable resistor and/or suppressor diode (120).

## Revendications

1. Circuit d'allumage (1) pour allumer une lampe à décharge gazeuse (10), notamment une lampe à décharge gazeuse haute pression, à laquelle est associé un circuit d'alimentation pour fournir une tension d'alimentation à courant alternatif (UN) à la lampe, comprenant un transmetteur d'allumage (20), qui est relié, côté primaire, à un circuit de déclenchement et côté secondaire, à la lampe, pour transmettre une impulsion d'allumage, le circuit de déclenchement présentant un couplage en série contenant au moins un accumulateur d'énergie d'entrée (30) relié au circuit d'alimentation de la lampe, un élément de commutation (40) autorégulé et une partie du transmetteur d'allumage (22), côté primaire, et un composant capacitif (60) étant couplé en série avec l'accumulateur d'énergie d'entrée (30) du circuit de déclenchement, **caractérisé par**, au moins, un premier composant à semi-conducteur, conçu en tant que varistor (100, 110), réalisé de manière bipolaire, à deux pôles et autorégulé, limitant la tension diminuant entre ses pôles de connexion et couplé en parallèle au composant (60) capacitif précité.

2. Circuit d'allumage (1) selon la revendication 1, **caractérisé en ce que** l'élément de commutation (40) est réalisé à deux pôles et qu'il ferme lorsqu'une tension prédéfinie est atteinte et devient non conducteur en cas de sous dépassement d'un courant de maintien prédéfini.

3. Circuit d'allumage (1) selon la revendication 1 ou 2, **caractérisé en ce qu'**il est prévu un deuxième composant à semi-conducteur (120) limitant la tension, réalisé de manière bipolaire, à deux pôles et autorégulé, disposé en série par rapport à l'élément de commutation (40) et réduisant le temps de maintien de l'élément de commutation.

4. Circuit d'allumage (1) selon la revendication 3, **caractérisé en ce que** le courant à l'état passant du deuxième composant à semi-conducteur (120) augmente de façon non linéaire avec une tension croissante appliquée au niveau de ses pôles de connexion, sachant qu'à une tension de 10 V, un courant à l'état passant inférieur à 100 mA, notamment inférieur à 10 mA, circule.

5. Circuit d'allumage (1) selon l'une quelconque des revendications 1 à 4, **caractérisé en ce que** l'accumulateur d'énergie d'entrée présente pour le circuit de déclenchement au moins un condensateur (60).

6. Circuit d'allumage (1) selon l'une quelconque des revendications 1 à 5, **caractérisé en ce que** le varistor (110) est disposé en parallèle au couplage en série contenant au moins l'accumulateur d'énergie d'entrée (30) et le composant capacitif (60).

7. Circuit d'allumage (1) selon l'une quelconque des revendications 1 à 5, **caractérisé en ce que** le deuxième composant à semi-conducteur (120) disposé en série par rapport à l'élément de commutation (40) comprend un varistor et/ou une diode de suppression (120).
